# EUROPÄISCHE PATENTANMELDUNG

(11) **EP 3 623 650 A1**
(43) Veröffentlichungstag der Anmeldung: **18.03.2020**
(21) Anmeldenummer: 19196495.6
(22) Anmeldetag: 10.09.2019
(51) Int. Cl.: F16B 41/00, F16B 5/02, F16B 21/07, F16B 21/08, B60R 13/02

(54) **HALTERUNGSEINRICHTUNG ZUR HALTERUNG EINES BEFESTIGUNGSMITTELS**

(30) Priorität: 17.09.2018 DE 102018122622
(71) Anmelder: MAN Truck & Bus SE, 80995 München (DE)
(72) Erfinder: Scherr, Stefan, 85221 Dachau (DE)
(74) Vertreter: v. Bezold & Partner Patentanwälte - PartG mbB

(57) **Zusammenfassung**

Die Erfindung betrifft eine Vorrichtung (100) mit einem Befestigungsmittel (10) und einer Halterungseinrichtung (20) zur Halterung, insbesondere Vormontagehalterung, des Befestigungsmittels (10) in einem Durchgangsloch (31) eines vorzugsweise metallischen Bauteils (30), wobei das Befestigungsmittel (10) einen Kopf (11) und einen Bolzen (12) aufweist. Die Vorrichtung (100) zeichnet sich insbesondere dadurch aus, dass die Halterungseinrichtung (20) ein hülsenförmiges Basisteil (21) umfasst, wobei das Basisteil (21) einen Aufnahmeraum zur abschnittsweisen Aufnahme des Bolzens (12) aufweist und zur Halterung in dem Durchgangsloch (31) ausgeführt ist, vorzugsweise um eine Vormontage des Befestigungsmittels (10) zu ermöglichen.

## Beschreibung

Die Erfindung betrifft eine Vorrichtung mit einem Befestigungsmittel und einer Halterungseinrichtung zur Halterung des Befestigungsmittels in einem Durchgangsloch eines vorzugsweise metallischen Bauteils. Die Halterungseinrichtung dient insbesondere als Vormontagehalterung für das Befestigungsmittel, z.B. für einen Kraftfahrzeug-Montagevorgang.

Insbesondere mehrteilige Schraubverbindungen benötigen aufgrund von Zugänglichkeits-, Ergonomie- und Prozessproblemen oftmals einen zweiten Mitarbeiter oder vormontierte Schrauben, um bei Heft- und/oder Anziehvorgängen eine korrekte Positionierung und ein (Gegen-) Halten sicherstellen zu können. Das ist nicht immer wirtschaftlich, da bei der Vormontage von z.B. Kraftfahrzeugbauteilen, wie etwa Längs- und Querträger, in der Regel formschlüssige Kunststoff- oder Metallhalter zum Einsatz kommen, die separat und wieder abnehmbar am Bauteil befestigt werden müssen und durch die dadurch erforderliche, spezielle Formgebung relativ teuer sind.

Eine Aufgabe der Erfindung ist es, eine verbesserte und/oder alternative Möglichkeit zur Halterung, insbesondere Vormontagehalterung, eines Befestigungsmittels an einem vorzugsweise metallischen Bauteil zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Vorrichtung mit einem Befestigungsmittel und einer Halterungseinrichtung zur Halterung, z.B. Vormontagehalterung, des Befestigungsmittels in einem Durchgangsloch eines vorzugsweise metallischen Bauteils. Das Befestigungsmittel kann zweckmäßig einen Kopf und einen Bolzen aufweisen.

Die Vorrichtung zeichnet sich insbesondere dadurch aus, dass die Halterungseinrichtung ein im Wesentlichen hülsenförmiges (z.B. im Wesentlichen rohrförmiges) Basisteil umfasst, wobei das Basisteil einen Aufnahmeraum zur abschnittsweisen Aufnahme des Bolzens aufweist und zur Halterung in dem Durchgangsloch ausgeführt ist, um vorzugsweise eine Vormontage des Befestigungsmittels zweckmäßig in dem Durchgangsloch zu ermöglichen.

Dadurch insbesondere ermöglichbare Vorteile sind:
- Günstige Materialkosten.
- Automatische Zentrierung des Befestigungsmittels.
- Teilweise Substituierung von Schweißbolzen; an Bauteilen, die aktuell mit Schweißbolzen ausgestattet sind, kann die Verwendung eines wie hierin beschriebenen vormontierten Befestigungsmittels kostengünstiger sein.
- Entkopplung der Tätigkeit "Suchen der korrekten Montageposition" von der eigentlichen Montagetätigkeit.
- Hohe Prozesssicherheit, Verringerung der Anzahl benötigter Informationssysteme am Band und Taktverkürzung.

Es ist möglich, dass das Basisteil mit seinem Außenumfang zur selbstklemmenden Halterung in dem Durchgangsloch ausgeführt ist.

Das Basisteil kann z.B. mit zumindest einer Rastnase zur verrastbaren Halterung zweckmäßig an dem Bauteil ausgeführt sein. Die Rastnase kann z.B. eine vorzugsweise konische Reduzierung und eine Verriegelungsfläche aufweisen, so dass das Basisteil einerseits durch den Kopf und andererseits durch die Rastnase in dem Durchgangsloch befestigbar ist.

Es ist möglich, dass die Rastnase durch ein Gegenstück (z.B. eine Mutter, ein Splint, etc.) zur Fixierung des Befestigungsmittels wegdeformierbar ist oder über vorzugsweise eine Sollbruchstelle abtrennbar ist, wenn das Befestigungsmittel und das Gegenstück aneinanderfixiert werden.

Das Basisteil kann z.B. eine (vorzugsweise konische) Reduzierung zur Zentrierung des Basisteils an oder in dem Durchgangsloch aufweisen, wodurch insbesondere der Einsetzvorgang des Basisteils mitsamt dem Befestigungsmittel in das Durchgangsloch erleichtert werden kann.

Die Rastnase kann z.B. an dem dem Kopf entgegengesetzten Endabschnitt des Basisteils ausgebildet sein und/oder zur Verrastung außerhalb des Durchgangslochs dienen. Alternativ oder ergänzend kann die Reduzierung an dem dem Kopf entgegengesetzten Endabschnitt des Basisteils ausgebildet sein.

Bei einer besonders bevorzugten Ausführungsform kann die Rastnase mit der Reduzierung versehen sein.

Das Basisteil kann z.B. aus (vorzugsweise elastischem) Gummi- oder Kunststoffmaterial hergestellt oder damit zumindest stellenweise versehen werden, um eine selbstklemmende, auf Pressung basierte Halterung in dem Durchgangsloch zu gewährleisten.

Das Basisteil weist zweckmäßig eine Längserstreckung auf, wobei der Bolzen ebenfalls zweckmäßig eine Längserstreckung aufweist. Es ist möglich, dass die Längserstreckung des Basisteils kleiner ist als die Längserstreckung des Bolzens, so dass der Bolzen mit seinem freien Endabschnitt aus dem Basisteil zur Fixierung mit einem Gegenstück (z.B. einer Mutter, einem Splint, etc.) herausragt, wenn das Befestigungsmittel im Basisteil positioniert ist.

Die Halterungseinrichtung ist vorzugsweise eine Vormontagehalterungseinrichtung zur Vormontagehalterung des Befestigungsmittels in dem Durchgangsloch des vorzugsweise metallischen Bauteils.

Es ist möglich, dass das Basisteil als Vormontagehalterung für einen Kraftfahrzeug-Montagevorgang (z. B. bezüglich eines Längs- und/oder Querträgers für eine Rahmentragstruktur eines Nutzfahrzeugs) ausgeführt ist und somit nur ein Hilfsmittel zur Halterung und Positionierung des Befestigungsmittels in einem Vormontageprozess darstellt, aber in einem Lastfall vorzugsweise im Wesentlichen keine Lasttragfunktion übernimmt (insbesondere nicht als Teil eines Kraftübertragungsprozesses im Lastfall z. B. des Befestigungsmittels und/oder des Bauteils) wirkt, obwohl es zusammen mit dem Befestigungsmittel innerhalb des Durchgangslochs positioniert ist. Alternativ oder ergänzend ist es möglich, dass die Halterungseinrichtung und somit insbesondere das Basisteil in seinem Endmontagezustand (zweckmäßig also im späteren Bauteilleben) keine Tragfunktion übernimmt, vorzugsweise überhaupt keine Funktion mehr übernimmt.

Das Basisteil stellt vorzugsweise eine Einweg-Vormontagehalterung dar, insbesondere, weil es für den dauerhaften Verbleib in dem Bauteil und/oder als "verlorene" ("stay in place") Vormontagehalterung ausgeführt ist.

Es ist möglich, dass das Befestigungsmittel mittels eines Fixierungsprozesses durch ein Gegenstück (z.B. eine Mutter, einen Splint, etc.) fixierbar ist, zweckmäßig ohne dass das Basisteil durch den Fixierungsprozess aufgespreizt wird.

Das Bauteil umfasst z. B. einen Längsträger und/oder einen Querträger einer z.B. im Wesentlichen leiterrahmenförmigen Rahmentragstruktur eines Nutzfahrzeugs.

Als Befestigungsmittel dient vorzugsweise eine Schraube, wobei der Kopf einen Schraubenkopf und der Bolzen einen Gewindebolzen dargestellt. Allerdings kann das Befestigungsmittel auch ausgeführt sein, um z. B. mit einem Splint oder einem anderen geeigneten Gegenstück gehaltert werden zu können.

Das Gegenstück kann z. B. eine Mutter oder ein Splint oder ein anderes geeignetes Mittel zum Fixieren des Befestigungsmittels umfassen.

Die Erfindung ist nicht auf eine Vorrichtung wie hierin beschrieben eingeschränkt, sondern umfasst auch ein Kraftfahrzeug mit einem z.B. metallischen Bauteil und mit zumindest einer Vorrichtung wie hierin beschrieben. Dabei kann das Basisteil mit dem Befestigungsmittel in das Durchgangsloch eingesetzt werden, so dass das Befestigungsmittel mittels Auflage des Kopfes auf dem Bauteil und Ausrichtung des Basisteils an einer Innenfläche des Durchgangsloches selbstzentriert positionierbar ist.

Das Durchgangsloch kann dabei z.B. einen Lochdurchmesser aufweisen, wobei das Basisteil einen Außendurchmesser aufweisen kann. Der Lochdurchmesser des Durchgangslochs ist vorzugsweise kleiner als der Außendurchmesser des Basisteils und zwar vor Einsatz in das Durchgangsloch, so dass das Basisteil mittels Pressung und/oder Klemmung in dem Durchgangsloch (zweckmäßig selbstzentriert) halterbar ist.

Das Kraftfahrzeug ist vorzugsweise ein Nutzfahrzeug, z. B. ein Lastkraftwagen oder Omnibus.

Zu erwähnen ist noch, dass der Lochdurchmesser des Durchgangslochs für den Einsatz des Basisteils mitsamt dem Befestigungsmittel zweckmäßig größer sein muss, als der für die Aufnahme des Befestigungsmittels allein sein müsste (z. B. bei üblichen Längsträgern zweckmäßig ca. 2mm größer).

Zu erwähnen ist ferner, dass die Halterungseinrichtung und somit insbesondere das Basisteil in seinem Endmontagezustand (insbesondere also im späteren Bauteilleben) vorzugsweise keine Tragfunktion übernimmt, z. B. letztendlich sogar überhaupt keine Funktion mehr übernimmt.

Zu erwähnen ist außerdem, dass das Basisteil einen vorzugsweise im Wesentlichen kreis- oder ringförmigen Querschnitt aufweisen kann.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung, bevorzugte Ausführungsformen der Erfindung in Verbindung mit den beigefügten Figuren.
- Figur 1: zeigt eine Seiten-/Schnittansicht einer Vorrichtung gemäß einer Ausführungsform der Erfindung und
- Figur 2: zeigt eine Seiten-/Schnittansicht einer Vorrichtung gemäß einer anderen Ausführungsform der Erfindung.

Die mit Bezugnahme auf die Figuren beschriebenen Ausführungsformen stimmen teilweise überein, so dass ähnliche oder identische Teile mit den gleichen Bezugszeichen versehen sind, und zu deren Erläuterung auch auf die Beschreibung der anderen Ausführungsformen verwiesen wird, um Wiederholungen zu vermeiden.

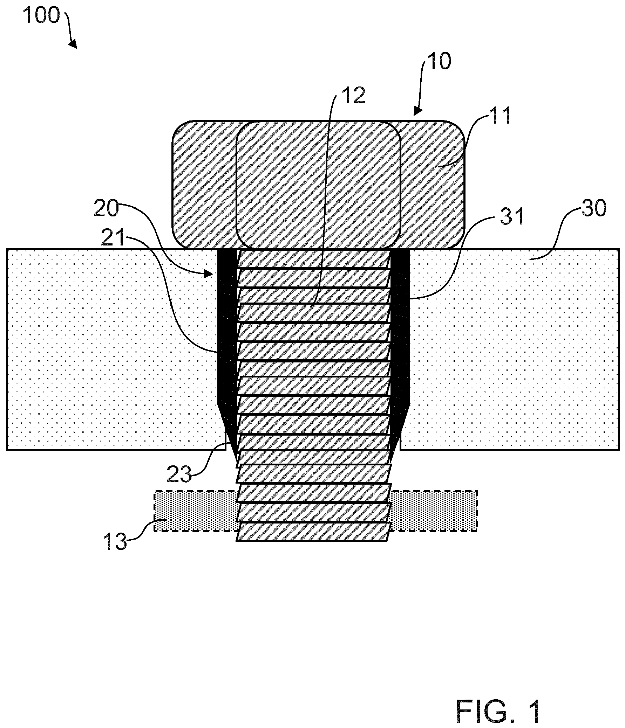

Figur 1 zeigt eine Seiten-/Schnittansicht einer Vorrichtung 100 gemäß einer Ausführungsform der Erfindung.

Die Vorrichtung 100 umfasst ein Befestigungsmittel 10 und eine Halterungseinrichtung 20 zur Halterung, insbesondere Vormontagehalterung, des Befestigungsmittels 10 in einem Durchgangsloch 31 eines zweckmäßig metallischen Bauteils 30. Das Befestigungsmittel 10 weist einen Kopf 11 und einen Bolzen 12 auf.

In der gezeigten Ausführungsform ist das Befestigungsmittel 10 eine Schraube, so dass der Kopf 11 einen Schraubenkopf darstellt und der Bolzen 12 einen Gewindebolzen darstellt. Die Erfindung ist allerdings nicht auf eine Schraube beschränkt, sondern umfasst auch andere Befestigungsmittel, wie z.B. Befestigungsmittel, die mittels eines Splints befestigt werden können.

Die Halterungseinrichtung 20 umfasst insbesondere ein im Wesentlichen hülsenförmiges Basisteil 21. Das Basisteil 21 weist einen Aufnahmeraum zur abschnittsweisen Aufnahme des Bolzens 12 auf und dient zur Halterung in dem Durchgangsloch 31, so dass eine Vormontage des Befestigungsmittels 10 in dem Durchgangsloch 31 und somit an dem Bauteil 30 ermöglicht wird. Das Basisteil 21 ist zweckmäßig ausgeführt, um mit seinem Außenumfang selbstklemmend in dem Durchgangsloch 31 gehaltert zu werden.

Das Durchgangsloch 31 weist einen Lochdurchmesser auf, wohingegen das Basisteil 21 einen Außendurchmesser aufweist. Der Lochdurchmesser des Durchgangslochs 31 ist kleiner als der Außendurchmesser des Basisteils 21 vor Einsatz in das Durchgangsloch 31, so dass das Basisteil 21 mittels Pressung und/oder Klemmung in dem Durchgangsloch 31 gehaltert wird.

Das Basisteil 21 ist aus elastischem Gummi- oder Kunststoffmaterial hergestellt, um eine selbstklemmende, auf Pressung basierte Halterung in dem Durchgangsloch 31 zu gewährleisten, wobei es hierzu auch ausreicht, das Basisteil 21 nur stellenweise mit elastischem Gummi- oder Kunststoffmaterial zu versehen.

Die Passung zwischen Durchgangsloch 31 und Basisteil 21 ist folglich auf Pressung und/oder Klemmung ausgelegt.

Das Basisteil 21 umfasst eine zweckmäßig im Wesentlichen konische Reduzierung 23, mithilfe derer das Basisteil 21 an oder in dem Durchgangsloch 31 leichter zentriert werden kann. Die Reduzierung 23 ist an dem dem Kopf 11 entgegengesetzten Endabschnitt des Basisteils 21 ausgebildet.

Das Basisteil 21 weist eine Längserstreckung auf, wobei der Bolzen 12 ebenfalls eine Längserstreckung aufweist. Die Längserstreckung des Basisteils 21 ist kleiner als die Längserstreckung des Bolzens 12, so dass der Bolzen 12 mit seinem freien Endabschnitt aus dem Basisteil 21 zur Fixierung mit einem Gegenstück 13 herausragt, wenn das Befestigungsmittel 10 im Basisteil 21 positioniert ist. Sofern das Befestigungsmittel 10 eine Schraube ist, kann als geeignetes Gegenstück 13 zur Fixierung eine z.B. übliche Mutter verwendet werden, in anderen Ausführungsformen, wie bereits erwähnt, auch z. B. ein Splint oder ein anderes geeignetes Gegenstück. Das Befestigungsmittel 10 ist mittels des Fixierungsprozesses durch das Gegenstück 13 fixierbar, ohne dass das Basisteil 21 durch den Fixierungsprozess mittels des Gegenstücks 13 aufgespreizt wird.

Das Basisteil 21 ist als Vormontagehalterung für einen Kraftfahrzeug-Montagevorgang ausgeführt, z. B. ein Montagevorgang bezüglich eines Längs- und/oder Querträgers für eine z. B. leiterrahmenförmige Rahmentragstruktur eines Nutzfahrzeugs, und zwar insbesondere als Einweg-Vormontagehalterung zum dauerhaften Verbleib in dem Bauteil 30 ("stay in place"). Das Basisteil 21 dient nur als Hilfsmittel zur Halterung und Positionierung des Befestigungsmittels 10 in einem Vormontageprozess, wohingegen es in einem Lastfall keine Lasttragfunktion übernimmt, insbesondere nicht als Teil eines Kraftübertragungsprozesses im Lastfall z. B. des Befestigungsmittels 10 und/oder des Bauteils 30 wirkt, obwohl es zusammen mit dem Befestigungsmittel 10 innerhalb des Durchgangslochs 31 und somit innerhalb des Bauteils 30 verbleibt.

Das Bauteil 30 umfasst vorzugsweise einen metallischen Längsträger und/oder einen metallischen Querträger einer z.B. leiterrahmenförmigen Rahmentragstruktur eines Nutzfahrzeugs, kann aber auch andere Kraftfahrzeugbauteile oder andere metallische, im Maschinen- oder Anlagenbau verwendete Bauteile umfassen.

Üblich ist es z. B., dass ein Längsträger für einzelne Garnierungsbauteile oder für unterschiedliche Fahrzeugvarianten eine Vielzahl an Montagepositionen zur Verfügung stellt. Ein Bandarbeiter erfährt die jeweils korrekte Montageposition meist über ein Informationssystem ("Werkerinformation"). Die Halterungseinrichtung 20 hingegen ermöglicht eine bereits korrekte Vormontage, so dass der Bandarbeiter sich auf den reinen Montagevorgang konzentrieren kann. Dies bietet Vorteile hinsichtlich Prozesssicherheit, Anzahl der benötigten Informationssysteme am Band und Taktverkürzung.

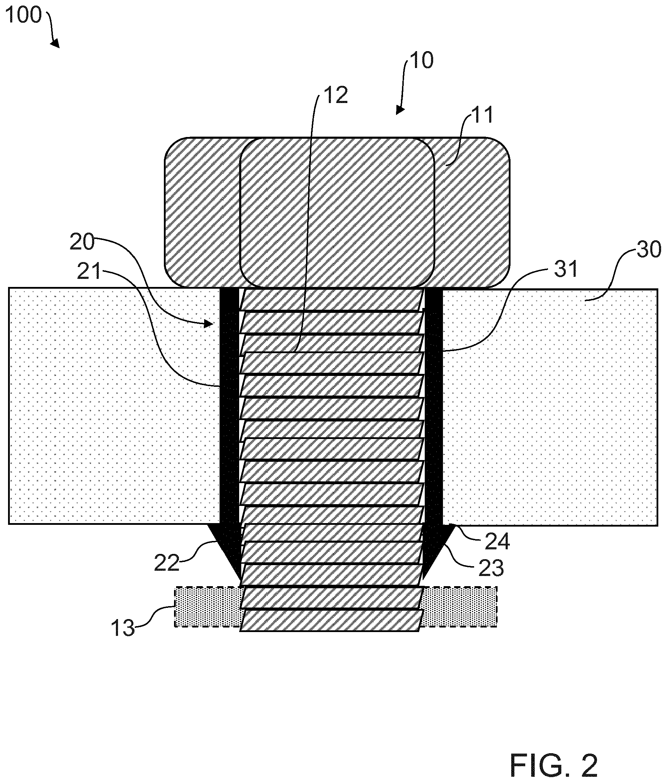

Figur 2 zeigt eine Seiten-/Schnittansicht einer Vorrichtung 100 gemäß einer anderen Ausführungsform der Erfindung.

Eine Besonderheit der in Figur 2 gezeigten Ausführungsform ist eine erweiterte Fixierung.

Zu diesem Zweck ist das Basisteil 21 mit zumindest einer Rastnase 22 zur verrastbaren Halterung ausgeführt. Die Rastnase 22 ist hierbei mit der konischen Reduzierung 23 versehen und weist eine Verriegelungsfläche 24 auf, so dass das Basisteil 21 einerseits durch den Kopf 11 und andererseits durch die Rastnase 22 in dem Durchgangsloch 31 befestigbar ist.

Die Rastnase 22 kann durch das Gegenstück 13 wegdeformiert oder z.B. über eine Sollbruchstelle abgetrennt werden, wenn das Befestigungsmittel 10 und das Gegenstück 13 aneinander fixiert werden, z.B. eine Mutter an den Bolzen 12 angeschraubt wird oder ein Splint durch den Bolzen 12 hindurch gesteckt wird.

Die Rastnase 22 und somit die Reduzierung 23 sind an dem dem Kopf 11 entgegengesetzten Endabschnitt des Basisteils 21 ausgebildet.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 10: Befestigungsmittel
- 11: Kopf
- 12: Bolzen
- 13: Gegenstück zur Fixierung des Befestigungsmittels, z.B. Mutter oder Splint
- 20: Halterungseinrichtung, vorzugsweise Vormontagehalterungseinrichtung
- 21: Basisteil
- 22: Rastnase
- 23: Reduzierung, vorzugsweise im Wesentlichen konische Reduzierung
- 24: Verriegelungsfläche
- 30: Bauteil, vorzugsweise metallisches Bauteil
- 31: Durchgangsloch
- 100: Vorrichtung

## Patentansprüche

1. Vorrichtung (100) mit einem Befestigungsmittel (10) und einer Halterungseinrichtung (20) zur Halterung, insbesondere Vormontagehalterung, des Befestigungsmittels (10) in einem Durchgangsloch (31) eines vorzugsweise metallischen Bauteils (30), wobei das Befestigungsmittel (10) einen Kopf (11) und einen Bolzen (12) aufweist, **dadurch gekennzeichnet, dass** die Halterungseinrichtung (20) ein hülsenförmiges Basisteil (21) umfasst, wobei das Basisteil (21) einen Aufnahmeraum zur abschnittsweisen Aufnahme des Bolzens (12) aufweist und zur Halterung in dem Durchgangsloch (31) ausgeführt ist, vorzugsweise um eine Vormontage des Befestigungsmittels (10) zu ermöglichen.

2. Vorrichtung (100) nach Anspruch 1, **dadurch gekennzeichnet, dass** das Basisteil (21) mit seinem Außenumfang zur selbstklemmenden Halterung in dem Durchgangsloch (31) ausgeführt ist.

3. Vorrichtung (100) nach einem der vorhergehenden Ansprüche, **dadurch gekennzeichnet, dass** das Basisteil (21) mit zumindest einer Rastnase (22) zur verrastbaren Halterung ausgeführt ist und vorzugsweise die Rastnase (22) eine konische Reduzierung (23) und eine Verriegelungsfläche (24) aufweist, so dass das Basisteil (21) einerseits durch den Kopf (11) und andererseits durch die Rastnase (22) in dem Durchgangsloch (31) befestigbar ist.

4. Vorrichtung (100) nach Anspruch 3, **dadurch gekennzeichnet, dass** die Rastnase (22) durch ein Gegenstück (13) zur Fixierung des Befestigungsmittels (10) wegdeformierbar ist oder über vorzugsweise eine Sollbruchstelle abtrennbar ist, wenn das Befestigungsmittel (10) und das Gegenstück (13) aneinander fixiert werden.

5. Vorrichtung (100) nach einem der vorhergehenden Ansprüche, **dadurch gekennzeichnet, dass** das Basisteil (21) eine vorzugsweise konische Reduzierung (23) zur Zentrierung des Basisteils (21) an oder in dem Durchgangloch (31) aufweist.

6. Vorrichtung (100) nach einem der Ansprüche 3 bis 5, **dadurch gekennzeichnet, dass**
- die Rastnase (22) an dem dem Kopf (11) entgegengesetzten Endabschnitt des Basisteils (21) ausgebildet ist und/oder zur Verrastung außerhalb des Durchgangslochs (31) dient, und/oder
- die Reduzierung (23) an dem dem Kopf (11) entgegengesetzten Endabschnitt des Basisteils (21) ausgebildet ist.

7. Vorrichtung (100) nach einem der Ansprüche 3 bis 6, **dadurch gekennzeichnet, dass** die Rastnase (22) mit der Reduzierung (23) versehen ist.

8. Vorrichtung (100) nach einem der vorhergehenden Ansprüche, **dadurch gekennzeichnet, dass** das Basisteil (21) aus vorzugsweise elastischem Gummi- oder Kunststoffmaterial hergestellt ist oder damit zumindest stellenweise versehen ist, um eine selbstklemmende, auf Pressung basierte Halterung in dem Durchgangsloch (31) zu gewährleisten.

9. Vorrichtung (100) nach einem der vorhergehenden Ansprüche, **dadurch gekennzeichnet, dass** das Basisteil (21) eine Längserstreckung aufweist und der Bolzen (12) eine Längserstreckung aufweist und die Längserstreckung des Basisteils (21) kleiner ist als die Längserstreckung des Bolzens (12), so dass der Bolzen (12) mit seinem freien Endabschnitt aus dem Basisteil (21) zur Fixierung mit einem Gegenstück (13) herausragt, wenn das Befestigungsmittel (10) im Basisteil (21) positioniert ist.

10. Vorrichtung (100) nach einem der vorhergehenden Ansprüche, **dadurch gekennzeichnet, dass**
- das Basisteil (21) als Vormontagehalterung, vorzugsweise Einweg-Vormontagehalterung, für einen Kraftfahrzeug-Montagevorgang ausgeführt ist und somit nur ein Hilfsmittel zur Halterung und Positionierung des Befestigungsmittels (10) in einem Vormontageprozess darstellt, aber in einem Lastfall keine Lasttragfunktion übernimmt, obwohl es zusammen mit dem Befestigungsmittel (10) innerhalb des Durchgangslochs (31) positioniert ist, und/oder
- die Halterungseinrichtung (20) und somit das Basisteil (21) in seinem Endmontagezustand keine Tragfunktion übernimmt.

11. Vorrichtung (100) nach einem der vorhergehenden Ansprüche, **dadurch gekennzeichnet, dass** das Befestigungsmittel (10) mittels eines Fixierungsprozesses durch ein Gegenstück (13) fixierbar ist, ohne dass das Basisteil (21) durch den Fixierungsprozess aufgespreitzt wird.

12. Vorrichtung (100) nach einem der vorhergehenden Ansprüche, **dadurch gekennzeichnet, dass** das Bauteil (30) einen Längsträger und/oder Querträger einer z. B. leiterrahmenförmigen Rahmentragstruktur eines Nutzfahrzeugs umfasst.

13. Vorrichtung (100) nach einem der vorhergehenden Ansprüche, **dadurch gekennzeichnet, dass** das Befestigungsmittel (10) eine Schraube ist, wobei der Kopf (11) einen Schraubenkopf und der Bolzen (12) einen Gewindebolzen darstellt.

14. Kraftfahrzeug mit einem vorzugsweise metallischen Bauteil (30) und mit zumindest einer Vorrichtung (100) nach einem der vorhergehenden Ansprüche, wobei das Basisteil (21) mit dem Befestigungsmittel (10) in das Durchgangsloch (31) einsetzbar ist, so dass das Befestigungsmittel (10) mittels Auflage des Kopfes (11) auf dem Bauteil (30) und Ausrichtung des Basisteils (21) an einer Innenfläche des Durchgangslochs (31) selbstzentriert positionierbar ist.

15. Kraftfahrzeug nach Anspruch 14, **dadurch gekennzeichnet, dass** das Durchgangsloch (31) einen Lochdurchmesser aufweist und das Basisteil (21) einen Außendurchmesser aufweist, wobei der Lochdurchmesser des Durchgangslochs (31) kleiner ist als der Außendurchmesser des Basisteils (21) vor Einsatz in das Durchgangsloch (31), so dass das Basisteil (21) mittels Pressung und/oder Klemmung in dem Durchgangsloch (31) gehaltert wird.
